# FASCICULE DE BREVET EUROPEEN

(11) **EP 3 017 453 B1**
(45) Date de publication et mention de la délivrance du brevet: **05.09.2018**
(21) Numéro de dépôt: 14737205.6
(22) Date de dépôt: 04.07.2014
(51) Int. Cl.: G21D 3/00, G21D 3/08, G21C 7/117, G21C 17/022

(54) **PROCEDE DE PILOTAGE EN PROLONGATION DE CYCLE D'UN REACTEUR NUCLEAIRE A EAU PRESSURISEE**
VERFAHREN ZUR STEUERUNG EINES DRUCKWASSERKERNREAKTORS WÄHREND EINES VERLÄNGERTEN REAKTORZYKLUS
METHOD FOR CONTROLLING A PRESSURIZED WATER NUCLEAR REACTOR DURING STRETCHOUT

(30) Priorité: 04.07.2013 FR 1356583
(43) Date de publication de la demande: 11.05.2016
(73) Titulaire: FRAMATOME, 92400 Courbevoie (FR)
(72) Inventeur: GROSSETETE, Alain, F-92000 Nanterre (FR)
(74) Mandataire: Cabinet Camus Lebkiri
(86) Numéro de dépôt international: PCT/EP2014/064366
(87) Numéro de publication internationale: WO 2015/001102

(56) Documents cités:
- EP-A2- 0 083 776
- FR-A1- 2 080 625
- US-A- 4 000 037
- US-A1- 2013 101 077
- M Vincke ET AL: "AVN's experience as TSO in safety assessments of steam-generator- replacement and power-uprate projects", , 8 novembre 2005 (2005-11-08), XP055106138, Extrait de l'Internet: URL:http://www.eurosafe-forum.org/files/pe _372_24_1_seminar1_01_2005.pdf [extrait le 2014-03-07]

## Description

### DOMAINE TECHNIQUE

Le domaine de l'invention est celui du pilotage d'un réacteur nucléaire à eau pressurisée lorsque celui-ci arrive en fin de cycle.

### ETAT DE LA TECHNIQUE

Un réacteur nucléaire à eau pressurisée est considéré en fin de cycle lorsqu'en condition nominale (puissance thermique égale à 100% de la puissance nominale) la concentration en bore est proche de zéro, typiquement inférieure à 10 ppm (partie par million).

Toutefois, en fin de cycle, il est tout de même possible de différer le rechargement et de continuer le fonctionnement en puissance du réacteur en compensant la perte de réactivité due à l'épuisement du combustible par une baisse de la température primaire, apportant la réactivité nécessaire par « effet modérateur » (variation de la réactivité apportée par la variation de température du modérateur, l'eau). Cette phase de prolongation de cycle est appelée usuellement « Stretch Out » en langue anglaise.

Pendant cette phase de « Stretch out », le pilotage du réacteur via les moyens de contrôle classique (contrôle de la température moyenne du fluide caloporteur primaire et contrôle de la distribution axiale de puissance) est rendu difficile par l'absence de possibilité de modifier par dilution la concentration en bore dans le fluide caloporteur primaire. Cette difficulté de pilotage est amplifiée par le fait que le coeur épuisé en combustible est plus instable devant les oscillations axiales xénon. Ainsi durant cette prolongation de phase, les mouvements de grappes de contrôle sont à éviter.

Tout au long de cette phase de « Stretch Out » qui peut durer jusqu'à deux mois, la baisse de la réactivité est compensée par la baisse de la température du liquide primaire. Cette baisse de la température entraîne une baisse de la pression au niveau des générateurs de vapeur. Ainsi, la puissance maximale du réacteur va être limitée par la puissance pouvant être atteinte par la turbine (toutes vannes d'admission turbine ouvertes) compte tenu de la pression vapeur en amont des vannes d'admission turbines. Le document US 4000037A propose par exemple une solution pour prolonger le cycle du combustible nucléaire en augmentant la réactivité du réacteur par une baisse de la température primaire notamment par l'ouverture de vannes permettant de « bypasser » les réchauffeurs d'eau du circuit d'eau secondaire.

De plus, lors de cette phase de prolongation de cycle, la manoeuvrabilité du réacteur est très réduite. Il n'est en effet pas possible de réguler la puissance produite par le réacteur de façon à correspondre à un programme préétabli par le service d'exploitation du réseau électrique (suivi de charge), ni d'effectuer, ou alors de façon très occasionnelle et sous surveillance accrue, des ajustements en temps réel de la production de puissance par rapport à la consommation d'énergie électrique avec des variations de faibles amplitudes (réglage de fréquence).

Durant cette prolongation de cycle, il est également nécessaire de réaliser une surveillance accrue de la part de l'opérateur pour détecter au plus tôt les débuts d'oscillation xénon. En cas d'oscillation xénon, une baisse de charge peut être nécessaire pour contrôler le réacteur, ce qui rend difficile voire impossible toute remontée en puissance. En effet, après une baisse de charge, la croissance en xénon ne peut plus être compensée par les opérations de dilution, ce qui nécessite une extraction des grappes de contrôle. Lorsque les grappes de contrôle sont positionnées en haut du coeur (position extraite), le contrôle de la distribution axiale de puissance n'est plus possible et le réacteur doit être arrêté.

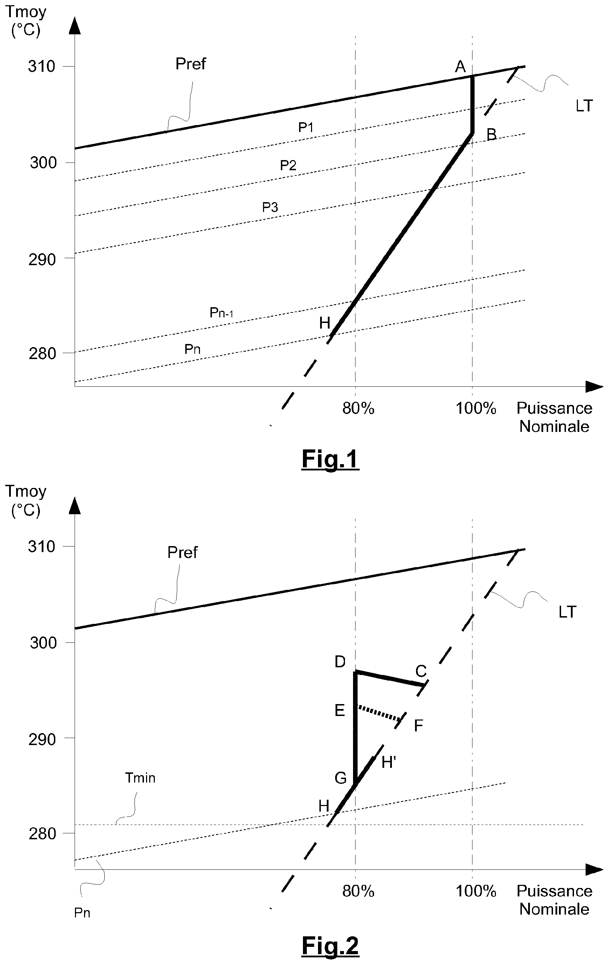

La figure 1 illustre les différents programmes de température au cours de la phase de « Stretch Out ». Le premier profil P_{ref} représente classiquement un exemple de profil de température de référence en fonction de la puissance d'un programme de régulation d'un réacteur à eau pressurisée lorsque celui-ci est en fonctionnement normal. En « Stretch Out », le profil de température du programme de régulation de température est décalé de manière périodique (de l'ordre de quelques jours) de quelques degrés, typiquement de 2 à 3°C. Le profil de température de référence P_{réf} en fonctionnement normal est donc conservé lors de la phase de « Stretch Out » et se décline en différents profils P₁, P₂, P₃, ...Pₙ au cours du temps.

Avec ce type de pilotage en « Stretch Out », la régulation de la température en mode normal est donc conservée avec les nouveaux profils de température (avec éventuellement une augmentation de la bande morte pour limiter les actions de grappes de contrôle).

### EXPOSE DE L'INVENTION

Le procédé de pilotage selon l'invention permet de modifier le principe de régulation de la température moyenne du liquide primaire et de la distribution axiale de puissance classiquement utilisé pendant cette phase de « Stretch Out ».

Dans ce contexte l'invention vise à fournir un procédé de pilotage en prolongation de cycle d'un réacteur nucléaire à eau pressurisée permettant d'améliorer la manoeuvrabilité du réacteur pendant cette phase de prolongation de fonctionnement du réacteur et permettant notamment de faciliter la faisabilité du réglage de fréquence.

A cette fin, l'invention a pour objet un procédé de pilotage d'un réacteur nucléaire à eau pressurisée comportant :
- un coeur produisant une puissance thermique ;
- des capteurs pour acquérir la température moyenne du liquide primaire de refroidissement et pour calculer la puissance thermique :
- des actionneurs pour contrôler la température du liquide primaire de refroidissement ;
- des actionneurs pour contrôler la distribution axiale de puissance ;
le procédé de pilotage est caractérisé en ce qu'il comporte une première phase de pilotage pour piloter le réacteur en fonctionnement normal par contrôle de la température moyenne du liquide primaire de manière à la faire correspondre à un profil de température de référence en fonction de la puissance thermique de réacteur ;
une deuxième phase de pilotage, dite en prolongation de cycle, intervenant postérieurement au fonctionnement normal du réacteur lorsque le combustible est épuisé, pour piloter le réacteur en prolongation de cycle par contrôle de la distribution axiale de puissance, la température moyenne variant librement dans un domaine de température délimité par une limite haute correspondant au profil de température de référence (P_{ref}) en fonctionnement normal du réacteur et une limite basse correspondant (i) au profil de température de référence (P_{ref}) en fonctionnement normal de réacteur avec un décalage de -Y°C, Y étant compris entre 5 et 50, ou (ii) à une température fixe égale à la température de référence à 100% de la puissance nominale avec un décalage de - Z°C, Z étant compris entre 10 et 50.

On considère que le réacteur est en prolongation de cycle dès lors que la concentration en bore est égale ou inférieure à 50 ppm et préférentiellement inférieur à 10 ppm.

Ainsi, le procédé de pilotage en phase de « Stretch Out » selon l'invention propose de contrôler la distribution axiale de puissance par des actions de mouvements de grappes de contrôle et de laisser évoluer librement la température moyenne du fluide primaire sans suivre un profil de température.

Ce principe de régulation en phase de prolongation de cycle est notamment facilité car la température moyenne du liquide primaire durant cette phase ne varie pas beaucoup compte tenu de l'effet modérateur élevé.

Grâce au procédé de pilotage selon l'invention, le réglage en fréquence du réacteur en phase de prolongation de cycle est largement facilité par rapport au pilotage selon l'état de la technique, car la température moyenne peut varier librement et ne doit plus être régulée pour correspondre à un profil de température de référence, tel qu'illustré à titre d'exemple à la figure 1.

De plus, le principe particulier de régulation du procédé de pilotage en phase de prolongation de cycle selon l'invention permet d'exploiter le réacteur à la puissance maximale possible, en particulier après la réalisation d'une baisse de charge, ce qui n'était pas le cas avec le pilotage selon l'état de la technique. En effet, après une baisse de charge (diminution de la puissance du réacteur), il est possible d'exploiter la baisse de la température pour compenser la croissance xénon et pour faire fonctionner le réacteur à sa puissance maximale. Un exemple sera décrit par la suite dans la description.

Le procédé de pilotage d'un réacteur nucléaire à eau pressurisée selon l'invention peut également présenter une ou plusieurs des caractéristiques ci-dessous prises individuellement ou selon toutes les combinaisons techniquement possibles :
- en phase de prolongation de cycle, le contrôle de la distribution axiale de puissance est opéré par des mouvements de grappes dans le coeur ;
- en phase de prolongation de cycle, le contrôle de la distribution axiale est opéré par des mouvements d'un groupe de grappes situé au-dessus de la mi-hauteur du coeur de sorte que les extrémités basses des grappes se déplacent entre la partie haute et la mi-hauteur du coeur ;
- en phase de fonctionnement normal, le contrôle de la température moyenne du liquide primaire et de la distribution axiale de puissance sont opérés par des mouvements de grappes dans le coeur avec ou sans modification de la concentration en bore du liquide primaire ;
- en phase de prolongation de cycle, le contrôle de la distribution axiale de puissance est automatisé ;
- en phase de prolongation de cycle, le contrôle de la distribution axiale de puissance est réalisé à une bande morte près autour de la distribution axiale de puissance consigne ;
- la limite basse du domaine de température correspond au profil de température de référence en fonctionnement normal du réacteur avec un décalage de -Y°C, Y étant compris entre 5 et 30.
- en variante, la limite basse correspond à une température fixe égale à la température de référence à 100% de puissance nominale avec un décalage de -Z°C, Z étant compris entre 20 et 30 ;
- en phase de prolongation de cycle, le domaine de température dans lequel la température moyenne du liquide primaire peut varier librement est limité par la puissance maximale qui peut être fournie à la turbine en fonction de la température du liquide primaire, appelée limite turbine.

### BREVES DESCRIPTION DES FIGURES

D'autres caractéristiques et avantages de l'invention ressortiront plus clairement de la description qui en est donnée ci-dessous, à titre indicatif et nullement limitatif, en référence aux figures :
La figure 1, décrite précédemment, illustre les différents programmes de régulation de température au cours de la phase de prolongation de cycle ainsi que l'évolution de la température en fonction de la puissance au cours de cette phase en fonctionnement à puissance maximale selon l'état de la technique.
La figure 2 illustre un exemple d'évolution de la température en fonction de la puissance lors d'une baisse de charge intervenant au cours de la phase de prolongation de cycle selon l'invention.
La figure 3 illustre l'évolution de la température en fonction de la puissance lors d'une baisse de charge intervenant au cours de la phase de prolongation de cycle selon l'état de la technique.

### DESCRIPTION DETAILLEE D'AU MOINS UN MODE DE REALISATION

Comme décrit précédemment à la figure 1, lorsque le réacteur passe en « Stretch Out » après un cycle de fonctionnement normal, une première phase consiste à conserver au maximum la puissance thermique du réacteur à 100% de la puissance nominale (PN). Cette première phase est illustrée à la figure 1 entre les points A et B. Le maintien à 100% de la puissance nominale est réalisé en augmentant l'ouverture des vannes d'admission turbine au fur et à mesure que la pression du circuit secondaire (et la température moyenne) diminue. La fin de cette première phase correspond à l'atteinte de la pleine ouverture des vannes d'admission turbine (point B).

Les vannes d'admission turbine étant complètement ouvertes, la puissance ne peut plus être maintenue à 100% lorsque la pression vapeur diminue. La puissance thermique maximale du réacteur diminue donc au fur et à mesure que la température moyenne du liquide primaire diminue et donc que la pression vapeur diminue. Cette phase représentée à la figure 1 entre les points B et H. Elle intervient après la première phase décrite précédemment et correspond à l'évolution de la puissance du réacteur à pleine puissance limitée par la pression vapeur à la turbine. Cette limite est appelée par la suite « limite turbine » et est représentée par la droite en pointillés référencée LT à la figure 1.

Selon l'état de la technique, au cours de cette phase A-B puis B-H décrite précédemment, le programme de température est décalé d'un programme Pᵢ à Pᵢ₊₁ au fur et à mesure de la baisse de la température lorsque la température atteint la limite inférieure de la bande morte du programme de température Pᵢ.

Selon le procédé de l'invention, l'évolution de température du réacteur à la puissance maximale est également limitée par la pression vapeur à la turbine. En revanche, la température évolue librement et n'est plus régulée selon un programme de régulation de la température Pi. Toutefois, lorsque l'on reste à la puissance maximale au cours du « Stretch Out », l'évolution de la température en fonction de la puissance reste identique à l'évolution décrite précédemment selon l'état de la technique.

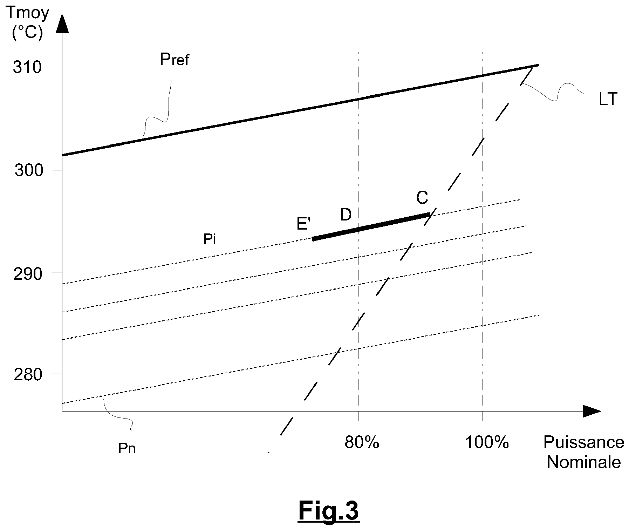

Les figures 2 et 3 illustrent le gain apporté en « Stretch Out » par le procédé de pilotage selon l'invention, notamment lors d'une baisse de charge.

Plus particulièrement, la figure 2 illustre un exemple d'évolution de la température en fonction de la puissance selon l'invention lors d'une baisse de charge intervenant au cours de la phase de prolongation de cycle décrite précédemment.

A titre de comparaison, la figure 3 illustre l'évolution de la température en fonction de la puissance lors d'une baisse de charge intervenant au cours de la phase de prolongation de cycle selon le procédé de pilotage de l'état de la technique.

En référence à la figure 2, lors de la réalisation d'une baisse de charge, par exemple avec un palier bas à 80% de la puissance nominale, à partir du point C avec le procédé de pilotage de l'invention contrôlant exclusivement la distribution axiale de puissance par insertion des grappes de contrôle, la température moyenne du liquide primaire va typiquement un peu augmenter compte tenu des effets cumulés de l'insertion des grappes pour contrôler la distribution axiale de puissance et de la compensation des autres effets de réactivité par la température moyenne. Cette baisse de charge est rapide (quelques minutes) et est représentée à la figure 2 entre les points C et D. Au palier bas de la baisse de charge (80% de la puissance nominale), la croissance de xénon est palliée par la baisse possible de la température moyenne sans modification de la puissance nominale (point D à G). Ainsi, à la suite de cette baisse de charge, le réacteur peut continuer à fonctionner au palier bas tant que la température moyenne n'a pas atteint la limite turbine LT (point G). Une fois que la température atteint la limite turbine, en fonction de la concentration de xénon dans le liquide primaire, la température moyenne peut diminuer (lorsque la concentration de xénon est élevée) entraînant par conséquent une baisse de la puissance thermique du réacteur (point G à H) ou peut également augmenter (lorsque la concentration de xénon est faible) permettant de réaliser une remontée en puissance pour atteindre la puissance maximale possible par exemple en suivant la limite turbine LT (point G à H', voire C). Durant toute la phase, on continue à contrôler la distribution axiale de puissance par des mouvements de grappes de contrôle.

Ainsi suite à une baisse de charge, telle que décrit précédemment, le procédé de pilotage selon l'invention permet de faire fonctionner plus longtemps le réacteur à sa puissance maximale.

Par ailleurs, le procédé de pilotage selon l'invention permet également de remonter en puissance suite à une baisse de charge, comme représenté par la droite pointillée entre les points E et F, tant que la limite turbine n'est pas atteinte. De manière identique, lorsque la température atteint la limite turbine, la variation de la température (augmentation ou diminution) dépendra de la concentration en xénon au moment de l'atteinte de la limite turbine (point F).

Il est également possible de définir des limites haute et basse d'évolution de la température moyenne du liquide primaire. La limite haute peut être par exemple le profil de régulation de température de référence en fonction de la puissance du réacteur en fonctionnement normale P_{ref}. La limite basse peut être par exemple le profil de régulation de température en fonction de la puissance du réacteur décalée de -Y°C, avec Y compris entre 5 et 50, et préférentiellement entre 5 et 30, et correspondant au profil de température Pₙ en fin de phase de prolongation de cycle. A titre d'exemple, la durée de la phase de prolongation de cycle est généralement de 30 jours et peut durer jusqu'à 60 jours.

En variante la limite basse, référencée Tₘᵢₙ sur la figure 2, correspond à une température fixe égale à la température de référence à 100% de puissance nominale avec un décalage de -Z°C, Z étant compris ente 10 et 50, et préférentiellement entre 20 et 30.

Le domaine de température ainsi limité par les limites haute et basse est quasiment contenu dans le domaine qui a fait l'objet d'étude de sureté en phase de « Stretch Out » selon le procédé de l'état de la technique.

Dans les situations où la température moyenne du liquide primaire atteint la limite haute ou la limite basse du domaine de température dans lequel la température peut varier librement, il est possible d'intervenir en agissant en priorité sur les grappes si cela est possible, puis sur la puissance et enfin sur la concentration en bore s'il n'est pas possible d'agir sur la puissance.

On peut utiliser comme actionneurs pour contrôler la température du liquide primaire de refroidissement à la fois les grappes de contrôle et le système d'injection de bore. Il en va de même pour les actionneurs de contrôle de la distribution axiale de puissance.

Les capteurs pour acquérir la température moyenne du liquide primaire de refroidissement sont par exemple des capteurs de mesure de la température du liquide primaire situés dans la branche chaude et dans la branche froide du circuit primaire (la température moyenne étant ensuite calculée en effectuant la moyenne de la température branche chaude et branche froide).

La puissance thermique peut par exemple être calculée en utilisant la différence des températures mesurées par les capteurs situés dans la branche chaude et dans la branche froide.

Ainsi, à titre d'exemple, lorsque la température moyenne atteint la limite haute du domaine de température, la première action consiste à insérer les grappes si cela est possible. Toutefois, si la distribution axiale de puissance est trop piquée vers le bas du coeur (c'est-à-dire qu'il y a un flux plus important dans le bas du coeur que dans le haut), une insertion des grappes de contrôle ne sera pas possible car cela déséquilibrerait encore plus la distribution axiale de puissance, alors on peut augmenter la puissance si celle-ci n'est pas déjà à sa puissance maximale et éventuellement extraire en même temps les grappes de contrôle. S'il n'est pas possible d'augmenter la puissance car celle-ci est déjà à sa limite maximale, alors une action de borication peut être réalisée.

Si la température atteint la limite basse, par exemple à partir du point H sur la figure 2, on extrait en priorité les grappes de contrôle si les grappes ne sont pas en limite haute dans le coeur et si la distribution axiale de puissance n'est pas trop piquée vers le haut du coeur. Si une extraction des grappes de contrôle n'est pas possible, alors on baisse la puissance et on insère si nécessaire les grappes.

En utilisant le principe de régulation selon l'état de la technique, la régulation de la température moyenne du réacteur aurait imposé de réguler la baisse de température suite à la baisse de charge en suivant le profil de température référence et donc de diminuer la puissance thermique du réacteur. Pour comparaison, le comportement du réacteur selon les mêmes conditions mais piloté selon le principe de pilotage de l'état de la technique est représenté à la figure 3.

Lorsqu'on réalise une baisse de charge à partir du point C identique à celle décrite précédemment en référence à la figure 2, le procédé de pilotage selon l'état de la technique va imposer de réguler la température de manière à ce que la température moyenne du liquide primaire corresponde à un profil de température Pi. Cette baisse de charge est représentée à la figure 3 entre les points C et D. Suite à cette baisse de charge, la baisse de la température moyenne va continuer à être régulée selon un même profil de température (points D à E') impliquant une baisse de puissance du réacteur en tenant compte de la nécessité de contrôler la température sans trop perturber la distribution axiale de puissance. Ceci en pratique peut amener l'exploitant à arrêter le réacteur peu de temps après cette baisse de charge.

De plus, selon l'état de la technique, il n'est pas possible de fonctionner à puissance constante jusqu'à la limite turbine suite à une baisse de charge.

Le procédé de pilotage en phase de prolongation de cycle est applicable quel que soit le mode de pilotage du réacteur. Ainsi, si le réacteur présente plusieurs types de grappes de contrôle avec des absorptivités neutroniques différentes, la régulation de la distribution axiale de puissance en phase de prolongation de cycle est identique mais avec une liberté de réglage supplémentaire ce qui permet d'optimiser davantage le pilotage du réacteur durant cette phase de prolongation de cycle.

Le procédé de pilotage selon l'invention a été particulièrement décrit avec un programme linéaire de régulation de la température, toutefois, l'invention est également applicable quel que soit le profil du programme de régulation de température.

## Revendications

1. Procédé de pilotage d'un réacteur nucléaire à eau pressurisée comportant :
- un coeur produisant une puissance thermique ;
- des capteurs pour acquérir la température moyenne du liquide primaire de refroidissement et pour calculer la puissance thermique ;
- des actionneurs pour contrôler la température du liquide primaire de refroidissement ;
- des actionneurs pour contrôler la distribution axiale de puissance ;
le procédé de pilotage est **caractérisé en ce qu'**il comporte :
- une première phase de pilotage pour piloter le réacteur en fonctionnement normal par contrôle de la température moyenne du liquide primaire de manière à la faire correspondre à un profil de température de référence (P_{ref}) en fonction de la puissance thermique de réacteur ;
- une deuxième phase de pilotage, dite en prolongation de cycle, intervenant postérieurement au fonctionnement normal du réacteur lorsque le combustible est épuisé, pour piloter le réacteur en prolongation de cycle par contrôle de la distribution axiale de puissance, la température moyenne variant librement dans un domaine de température délimité par une limite haute correspondant au profil de température de référence (P_{ref}) en fonctionnement normal du réacteur et une limite basse correspondant (i) au profil de température de référence (P_{ref}) en fonctionnement normal de réacteur avec un décalage de -Y°C, Y étant compris entre 5 et 50, ou (ii) à une température fixe égale à la température de référence à 100% de la puissance nominale avec un décalage de -Z°C, Z étant compris entre 10 et 50.

2. Procédé de pilotage d'un réacteur nucléaire à eau pressurisée selon la revendication 1 **caractérisé en ce que** la limite basse du domaine de température correspond au profil de température de référence (P_{ref}) en fonctionnement normal du réacteur avec un décalage de -Y°C, Y étant compris entre 5 et 30.

3. Procédé de pilotage d'un réacteur nucléaire à eau pressurisée selon la revendication 1 **caractérisé en ce que** la limite basse correspond à une température fixe égale à la température de référence à 100% de la puissance nominale avec un décalage de -Z°C, Z étant compris entre 20 et 30.

4. Procédé de pilotage d'un réacteur nucléaire à eau pressurisée selon l'une des revendications précédentes **caractérisé en ce qu'**en phase de prolongation de cycle le contrôle de la distribution axiale de puissance est opéré par des mouvements de grappes dans le coeur.

5. Procédé de pilotage d'un réacteur nucléaire à eau pressurisée selon la revendication précédente **caractérisé en ce qu'**en phase de prolongation de cycle le contrôle de la distribution axiale est opéré par des mouvements d'un groupe de grappes situé au-dessus de la mi-hauteur du coeur de sorte que les extrémités basses se déplacent entre la partie haute et la mi-hauteur du coeur.

6. Procédé de pilotage d'un réacteur nucléaire à eau pressurisée selon la revendication précédente **caractérisé en ce qu'**en phase de fonctionnement normal le contrôle de la température moyenne du liquide primaire et de la distribution axiale de puissance sont opérés par des mouvements de grappes dans le coeur avec ou sans modification de la concentration en bore du liquide primaire.

7. Procédé de pilotage d'un réacteur nucléaire à eau pressurisée selon l'une des revendications précédentes **caractérisé en ce qu'**en phase de prolongation de cycle le contrôle de la distribution axiale de puissance est automatisé.

8. Procédé de pilotage d'un réacteur nucléaire à eau pressurisée selon l'une des revendications précédentes **caractérisé en ce qu'**en phase de prolongation de cycle le contrôle de la distribution axiale de puissance est réalisé à une bande morte près autour de la distribution axiale de puissance consigne.

9. Procédé de pilotage d'un réacteur nucléaire à eau pressurisée selon l'une des revendications précédentes **caractérisé en ce qu'**en phase de prolongation de cycle, le domaine de température dans lequel la température moyenne du liquide primaire peut varier librement, est limité par la puissance maximale qui peut être fournie à la turbine en fonction de la température du liquide primaire, appelée limite turbine.

## Patentansprüche

1. Steuerverfahren eines Kernreaktors mit Druck beaufschlagtem Wasser, umfassend:
- einen eine thermische Leistung produzierenden Kern;
- Sensoren zur Erfassung der Durchschnittstemperatur der primären Kühlflüssigkeit und zur Berechnung der thermischen Leistung;
- Wirkglieder zur Kontrolle der Temperatur der primären Kühlflüssigkeit;
- Wirkglieder zur Kontrolle der axialen Leistungsverteilung;
wobei das Steuerverfahren **dadurch gekennzeichnet ist, dass** es umfasst:
- eine erste Steuerphase zur Steuerung des Reaktors im Normalbetrieb per Kontrolle der Durchschnittstemperatur der primären Flüssigkeit derart, dass sie einem Referenztemperaturprofil (P_{ref}) in Abhängigkeit von der thermischen Reaktorleistung entsprechend gemacht wird;
- eine zweite Steuerphase, bezeichnet als Zyklusverlängerung, die nach dem Normalbetrieb des Reaktors einsetzt, wenn der Brennstoff verbraucht ist, um den Reaktor in Zyklusverlängerung per Kontrolle der axialen Leistungsverteilung zu steuern, wobei die Durchschnittstemperatur in einem Temperaturbereich frei schwankt, der durch eine obere Grenze, die dem Referenztemperaturprofil (P_{ref}) im Normalbetrieb des Reaktors entspricht, und einer unteren Grenze, die (i) dem Referenztemperaturprofil (P_{ref}) im Normalbetrieb des Reaktors mit einer Verschiebung von -Y° C, entspricht, wobei Y zwischen 5 und 50 inbegriffen ist, oder (ii) einer fixen Temperatur, die gleich der Referenztemperatur von 100 % der nominalen Leistung mit einer Verschiebung von -Z° C, wobei Z zwischen 10 und 50 inbegriffen ist, begrenzt wird.

2. Steuerverfahren eines Kernreaktors mit Druck beaufschlagtem Wasser gemäß Anspruch 1, **dadurch gekennzeichnet, dass** die untere Grenze des Temperaturbereichs dem Referenztemperaturbereich (P_{ref}) im Normalbetrieb des Reaktors mit einer Verschiebung von -Y° C entspricht, wobei Y zwischen 5 und 30 inbegriffen ist.

3. Steuerverfahren eines Kernreaktors mit Druck beaufschlagtem Wasser gemäß Anspruch 1, **dadurch gekennzeichnet, dass** die untere Grenze einer festen Temperatur entspricht, die gleich der Referenztemperatur bei 100 % der nominalen Leistung mit einer Verschiebung von -Z° C entspricht, wobei Z zwischen 20 und 30 inbegriffen ist.

4. Steuerverfahren eines Nuklearreaktors mit Druck beaufschlagtem Wasser gemäß einem der voranstehenden Ansprüche, **dadurch gekennzeichnet, dass** die Kontrolle der axialen Leistungsverteilung in der Zyklusverlängerungsphase durch Bewegungen von Spritzplaketten im Kern durchgeführt wird.

5. Steuerverfahren eines Nuklearreaktors mit Druck beaufschlagtem Wasser gemäß dem voranstehenden Anspruch, **dadurch gekennzeichnet, dass** die Kontrolle der axialen Verteilung in der Zyklusverlängerungsphase durch Bewegungen einer Gruppe von Spritzplaketten durchgeführt wird, die sich oberhalb der halben Höhe des Kerns derart befinden, dass die unteren Extremitäten sich zwischen dem oberen Teil und der mittleren Höhen des Kerns bewegen.

6. Steuerverfahren eines Nuklearreaktors mit Druck beaufschlagtem Wasser gemäß dem voranstehenden Anspruch, **dadurch gekennzeichnet, dass** die Kontrolle der Durchschnittstemperatur der primären Flüssigkeit und der axialen Leistungsverteilung in der normalen Betriebsphase durch Bewegungen von Spritzplaketten im Kern mit oder ohne Änderung der Bor-Konzentration der primären Flüssigkeit durchgeführt wird.

7. Steuerverfahren eines Kernreaktors mit Druck beaufschlagtem Wasser gemäß einem der voranstehenden Ansprüche, **dadurch gekennzeichnet, dass** die Kontrolle der axialen Leistungsverteilung in der Zyklusverlängerungsphase automatisiert ist.

8. Steuerverfahren eines Kernreaktors mit Druck beaufschlagtem Wasser gemäß einem der voranstehenden Ansprüche, **dadurch gekennzeichnet, dass** die Kontrolle der axialen Leistungsverteilung in der Zyklusverlängerungsphase an einem toten Band um die axiale Soll-Leistungsverteilung realisiert wird.

9. Steuerverfahren eines Nuklearreaktors mit Druck beaufschlagtem Wasser gemäß einem der voranstehenden Ansprüche, **dadurch gekennzeichnet, dass** der Temperaturbereich, in dem die Durchschnittstemperatur der primären Flüssigkeit in der Zyklusverlängerungsphase frei schwanken kann, durch die maximale Leistung, die der Turbine in Abhängigkeit von der Temperatur der primären Flüssigkeit, bezeichnet als Turbinengrenze, geliefert werden kann, begrenzt wird.

## Claims

1. A method for controlling a pressurised water nuclear reactor including:
- a core producing thermal power;
- sensors for acquiring the mean temperature of the primary coolant and for calculating thermal power;
- actuators for controlling the temperature of the primary coolant;
- actuators for controlling the axial power distribution;
the driving method being **characterised in that** it includes:
- a first control phase for controlling the reactor in normal operation by controlling the mean temperature of the primary coolant so as to match it to a reference temperature profile (P_{ref}) as a function of the thermal power of the reactor;
- a second control phase, referred to as stretchout phase, occurring after the normal operation of the reactor when the fuel is spent, for controlling the reactor in stretchout phase by controlling the axial power distribution, the mean temperature freely varying in a temperature range delimited by an upper limit corresponding to the reference temperature profile (P_{ref}) in normal operation of the reactor and a lower limit corresponding (i) to the reference temperature profile (P_{ref}) in normal operation of the reactor with an offset of -Y°C, Y being between 5 and 50, or (ii) to a fixed temperature equal to the reference temperature at 100% of the rated power with an offset of -Z°C, Z being between 10 and 50.

2. The method for controlling a pressurised water nuclear reactor according to claim 1, **characterised in that** the lower limit of the temperature range corresponds to the reference temperature profile (P_{ref}) in normal operation of the reactor with an offset of -Y°C, Y being between 5 and 30.

3. The method for controlling a pressurised water nuclear reactor according to claim 1, **characterised in that** the lower limit corresponds to a fixed temperature equal to the reference temperature at 100% of the rated power with an offset of -Z°C, Z being between 20 and 30.

4. The method for controlling a pressurised water nuclear reactor according to one of the preceding claims, **characterised in that** in stretchout phase, controlling the axial power distribution is operated by movements of clusters in the core.

5. The method for controlling a pressurised water nuclear reactor according to the preceding claim, **characterised in that** in stretchout phase, the control of the axial power distribution is operated by movements of a group of clusters located above half-height of the core such that the low ends move between the low part and the half-height of the core.

6. The method for controlling a pressurised water nuclear reactor according to the preceding claim, **characterised in that** in the normal operation phase, the control of the mean temperature of the primary coolant and the axial power distribution are operated by movements of clusters in the core with or without modification of the boron concentration of the primary coolant.

7. The method for controlling a pressurised water nuclear reactor according to one of the preceding claims, **characterised in that** in stretchout phase, controlling the axial power distribution is automated.

8. The method for controlling a pressurised water nuclear reactor according to one of the preceding claims, **characterised in that** in stretchout phase, the control of the axial power distribution is made within a dead band around the axial power distribution set point.

9. The method for controlling a pressurised water nuclear reactor according to one of the preceding claims, **characterised in that** in stretchout phase, the temperature range in which the mean temperature of the primary coolant can freely vary, is limited by the maximum power which can be provided to the turbine as a function of the temperature of the primary coolant, called a turbine limit.
